# FASCICULE DE BREVET EUROPEEN

(11) **EP 2 198 438 B1**
(45) Date de publication et mention de la délivrance du brevet: **12.12.2012**
(21) Numéro de dépôt: 08804096.9
(22) Date de dépôt: 12.09.2008
(51) Int. Cl.: H01G 13/00

(54) **PROCEDE ET DISPOSITIF POUR LA FABRICATION D'ENSEMBLES DE STOCKAGE D'ENERGIE ELECTRIQUE**
VERFAHREN UND EINRICHTUNG ZUM HERSTELLEN VON ELEKTRISCHEN ENERGIESPEICHERBAUGRUPPEN
METHOD AND DEVICE FOR MAKING ELECTRIC ENERGY STORAGE ASSEMBLIES

(30) Priorité: 13.09.2007 FR 0706424
(43) Date de publication de la demande: 23.06.2010
(73) Titulaire: Batscap, 29500 Ergué-Gabéric (FR)
(72) Inventeur: CAUMONT, Olivier, F-29000 Quimper (FR); LE DRIANT, Fabrice, F-29500 Ergue Gaberic (FR); MANDO, Philippe, F-29000 Quimper (FR)
(74) Mandataire: Regimbeau
(86) Numéro de dépôt international: PCT/EP2008/062131
(87) Numéro de publication internationale: WO 2009/034164

(56) Documents cités:
- EP-A- 1 223 592
- DE-A1- 2 325 985
- FR-A- 2 094 491
- FR-A- 2 603 736
- JP-A- 9 092 338
- US-A- 3 237 274
- US-A1- 2006 024 572

## Description

La présente invention concerne le domaine technique général des ensembles de stockage d'énergie électrique.

Plus particulièrement l'invention concerne un dispositif et un procédé pour la fabrication de tels ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant une anode, une cathode et une solution d'électrolyte entre l'anode et la cathode).

### PRESENTATION GENERALE DE L'ART ANTERIEUR

On connaît des procédés pour la fabrication d'ensemble de stockage d'énergie électrique 1 (cf. document US-A1-2006/024572)

Un tel ensemble de stockage comprend classiquement un élément bobiné cylindrique comprenant au moins deux électrodes et au moins un séparateur. Les électrodes et le séparateur comprennent respectivement une ou plusieurs feuilles superposées.

Chaque électrode déborde à une extrémité respective de l'élément bobiné pour former une tranche collectrice de courant en forme de spirale à chaque extrémité de l'élément bobiné. Ainsi, deux tranches collectrices sont disposées respectivement aux deux extrémités opposées de l'élément bobiné.

Chaque tranche collectrice est destinée à être connectée et soudée par son extrémité libre :
- soit directement à un couvercle venant fermer une extrémité d'un boîtier cylindrique creux dans lequel est logé l'élément bobiné,
- soit à une pièce intermédiaire de connexion reliée au couvercle.

Dans la suite de la description, on s'intéressera plus particulièrement au cas où l'extrémité de la tranche collectrice de courant est soudée directement au couvercle. Toutefois, le lecteur appréciera que les problèmes évoqués et les solutions proposées par l'invention s'appliquent indifféremment à la soudure de l'extrémité de la tranche au couvercle ou à une pièce intermédiaire reliée au couvercle.

La technique de soudure entre l'extrémité d'une tranche collectrice et son couvercle associé est généralement une soudure laser réalisée sur des rayons de l'extrémité de la tranche collectrice de courant.

La qualité et la reproductibilité de la soudure laser de l'extrémité de la tranche collectrice sur le couvercle sont liées principalement aux paramètres suivants :
- la maîtrise de la qualité du faisceau laser,
- la maîtrise des épaisseurs et de l'homogénéité de l'extrémité de la tranche collectrice, et du couvercle à souder,
- la maîtrise du contact entre l'extrémité de la tranche collectrice et le couvercle.

La qualité de la soudure par transparence telle qu'effectuée actuellement pâtit du fait que le couvercle est massif (2 à 3 millimètres d'épaisseur généralement et entre 0.5 et 1 mm sur la zone de soudure) par rapport à l'extrémité de la tranche collectrice de la bobine dont l'épaisseur est comprise entre 20 et 50 microns.

Cette différence d'épaisseurs joue fortement sur les transferts thermiques lors de la soudure laser d'un couvercle sur l'extrémité de la tranche collectrice de la bobine : dès que le couvercle se met à fondre, la portion fondue du couvercle vient fondre sur l'extrémité de la tranche collectrice et peut entraîner des effondrements de cette dernière du fait de la forte différence d'absorption de chaleur entre le couvercle 30 et l'extrémité de la tranche collectrice.

Une mauvaise qualité de contact entre l'extrémité de la tranche collectrice et le couvercle et/ou une épaisseur variable de l'extrémité de la tranche collectrice le long d'une soudure peut engendrer :
- une mauvaise qualité de soudure liée à un manque de matière soudé, ce qui entraîne une hausse de la résistance série de l'ensemble de stockage,
- la création de trous sur le couvercle du fait d'une instabilité des points de fusion de la soudure ou de l'emprisonnement de gaz entre l'extrémité de la tranche collectrice et le couvercle créant une bulle lors de l'échauffement de la soudure, ce qui entraîne une perte d'étanchéité de l'ensemble de stockage.

Un but de l'invention est de proposer un procédé de fabrication d'un ensemble de stockage permettant de limiter les pertes d'étanchéité de l'ensemble de stockage durant la soudure des couvercles sur les extrémités des tranches collectrices de courant.

Un autre but de l'invention est de proposer un procédé permettant d'améliorer la qualité électrique et mécanique de la soudure.

Un autre but est de proposer un dispositif pour la mise en oeuvre du procédé selon l'invention.

### PRESENTATION DE L'INVENTION

A cet effet on prévoit un procédé de fabrication d'un ensemble de stockage d'énergie électrique comprenant un élément bobiné cylindrique comportant au moins deux électrodes et au moins un séparateur enroulés ensemble en spires, chaque électrode débordant à une extrémité axiale respective de l'élément bobiné afin de former une tranche collectrice de courant sur laquelle au moins une pièce collectrice de courant reliée électriquement à un couvercle est destinée à être soudée, ledit couvercle venant fermer un boîtier dans lequel est logé l'élément bobiné, dans lequel le procédé comprend une étape de couchage radial d'au moins une tranche collectrice de courant à son extrémité, du centre vers la périphérie de l'extrémité de la tranche collectrice.

Le fait de coucher radialement l'extrémité de la tranche collectrice du centre vers la périphérie de cette extrémité permet d'améliorer la planéité de l'extrémité de la tranche collectrice, ce qui améliore la qualité du contact entre l'extrémité de la tranche collectrice et le couvercle ou la pièce intermédiaire de connexion.

En effet, dans le cas d'un couchage radial de l'extrémité de la tranche collectrice de la périphérie vers le centre, des portions de la tranche collectrice auront tendance à revenir dans leur position initiale une fois le couchage effectué, ce qui dégrade la planéité de l'extrémité de la tranche collectrice de courant, et donc la qualité du contact entre l'extrémité de la tranche collectrice et le couvercle ou la pièce intermédiaire de connexion.

Bien entendu, la pièce dite collectrice de courant peut être une pièce intermédiaire entre l'extrémité de la tranche et le couvercle (la pièce collectrice est dans ce cas séparée du couvercle) ou faire partie du couvercle (la pièce collectrice est dans ce cas solidaire du couvercle de sorte que le couvercle et la pièce collectrice forment un élément unique).

Des aspects préférés mais non limitatifs du procédé selon l'invention sont les suivants, pris seuls ou en combinaisons :
- le couchage de l'extrémité de la tranche collectrice de courant (102, 103) est obtenu par écrasement.
- l'étape de couchage est réalisée sur toute la surface de l'extrémité de la tranche collectrice de courant (102, 103).
- l'étape de couchage est réalisée par application d'au moins un galet (40) comprimant l'extrémité de la tranche collectrice de courant (102, 103) depuis le centre vers la périphérie de l'extrémité de la tranche collectrice de courant.
- l'élément bobiné (10) est animé d'un mouvement relatif de translation et de rotation par rapport au galet (40).
- la surface de contact entre le galet (40) et l'extrémité de la tranche collectrice de courant (102, 103) est inférieure au rayon de ladite extrémité.
- l'étape de couchage comprend au moins un passage du galet (40) sur toute la surface de l'extrémité de la tranche collectrice de courant (102, 103).
- l'étape de couchage s'effectue en au moins deux passages du galet (40) sur l'extrémité de la tranche collectrice de courant (102, 103), chaque passage couchant les spires (101) sur une hauteur inférieure à 1,5 mm.
- la vitesse du mouvement de rotation est supérieure à 400 tours par minute, préférentiellement comprise entre 400 et 1600 tours par minute, et encore plus préférentiellement comprise entre 800 et 1300 tours par minute.
- le galet (40) couche l'extrémité de la tranche collectrice de courant sur une hauteur comprise entre 0.5 millimètre et 3 millimètres.
- on couche les tranches collectrices de courant (102, 103) de façon à obtenir un recouvrement d'une spire sur la spire consécutive d'au moins 0,1 mm.
- d'une part l'élément bobiné (10) cylindrique est animé d'un mouvement de rotation autour de son axe de révolution, et d'autre part le galet (40) est animé d'un mouvement de translation perpendiculairement à l'axe de révolution de l'élément bobiné (10).
- d'une part le support du galet (40) est fixe, et d'autre part l'élément bobiné (10) cylindrique est animé d'un mouvement de rotation autour de son axe de révolution et d'un mouvement de translation par rapport au galet (40).
- d'une part l'élément bobiné (10) est fixe, et d'autre part le galet (40) est animé d'un mouvement de translation et d'un mouvement de rotation par rapport à l'élément bobiné (10).
- il comprend une étape consistant à écraser la paroi latérale (104) de la tranche collectrice de courant (102, 103) au niveau de son extrémité libre,

pour chanfreiner l'extérieur de la tranche collectrice de courant une fois couchée.
- le galet (40) comprend au moins une bille rotative.
- le galet (40) comprend une pluralité de rouleaux espacés d'une distance d le long d'un rayon de l'extrémité de la tranche, la pluralité de rouleaux étant déplacée du centre vers la périphérie de l'extrémité de la tranche collectrice sur la distance d, de sorte à coucher des zones différentes de l'extrémité de la tranche collectrice.
- le galet (40) comprend une pluralité de rouleaux décalés angulairement les uns par rapport aux autres, chaque rouleau étant en contact avec toute la surface de l'extrémité de la tranche collectrice de courant, chaque rouleau successif augmentant la hauteur de couchage de l'extrémité de la tranche collectrice réalisée par le rouleau précédemment en contact avec l'extrémité de la tranche collectrice de courant.
- l'étape de couchage comprend :
   - une étape de préparation des bords des spires consistant à orienter vers l'extérieur le bord des spires de l'élément bobiné, et
   - une étape consistant à écraser le bord des spires orientées de la base de l'élément bobiné.

L'invention concerne également un dispositif pour la mise en oeuvre du procédé précédemment décrit. Plus particulièrement, l'invention concerne également un dispositif de fabrication d'un ensemble de stockage d'énergie électrique comprenant un élément bobiné cylindrique comportant au moins deux électrodes et au moins un séparateur enroulés ensemble en spires, chaque électrode débordant à une extrémité axiale respective de l'élément bobiné afin de former une tranche collectrice de courant sur laquelle au moins une pièce collectrice de courant reliée électriquement à un couvercle est destinée à être soudée, ledit couvercle venant fermer un boîtier dans lequel est logé l'élément bobiné, dans lequel le dispositif comprend des moyens de couchage radial d'au moins une tranche collectrice de courant à son extrémité, du centre vers la périphérie de l'extrémité de la tranche collectrice.

L'invention concerne également un ensemble de stockage d'énergie électrique comprenant un élément bobiné cylindrique comportant au moins deux électrodes et au moins un séparateur enroulés ensemble en spires, chaque électrode débordant à une extrémité axiale respective de l'élément bobiné afin de former une tranche collectrice de courant sur laquelle au moins une pièce collectrice de courant reliée électriquement à un couvercle est destinée à être soudée, ledit couvercle venant fermer un boîtier dans lequel est logé l'élément bobiné, dans lequel au moins une tranche collectrice de courant est couchée radialement à son extrémité, les spires étant couchées du centre vers la périphérie de l'extrémité de la tranche collectrice.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 est un schéma de principe illustrant, selon une coupe longitudinale, les différents éléments constituant un ensemble de stockage d'énergie électrique,
- la figure 2 est une vue en perspective d'un élément bobiné de l'ensemble de stockage d'énergie électrique,
- la figure 3 illustre l'étape de couchage de l'élément bobiné,
- la figure 4 illustre un mode de réalisation d'un dispositif de fabrication d'éléments bobinés.
- La figure 5 illustre une étape alternative du procédé selon l'invention.

### DESCRIPTION DE L'INVENTION

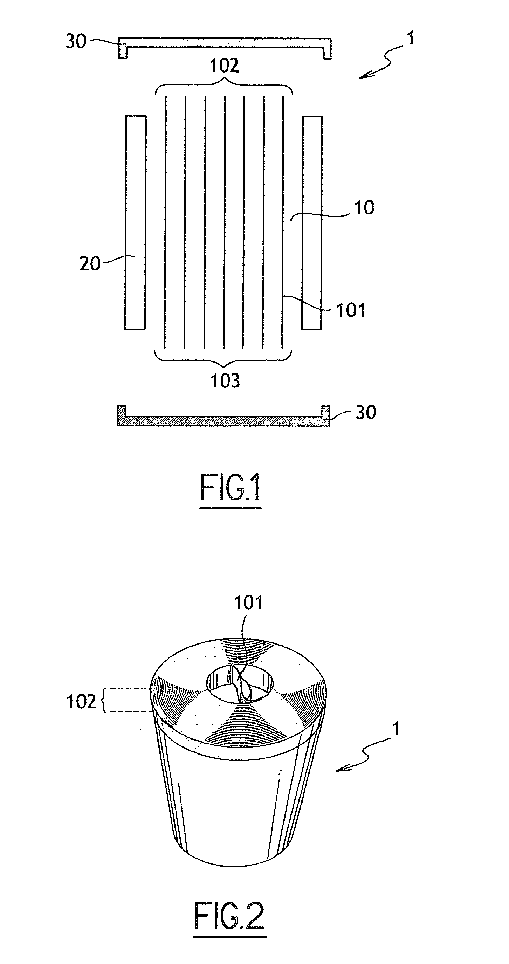

On va maintenant décrire différents modes de réalisation du procédé et du dispositif selon l'invention en référence aux figures. Dans ces différentes figures 1 à 5, les éléments équivalents portent les mêmes références numériques.

Comme illustré aux figures 1 et 2, un ensemble de stockage 1 comprend un élément bobiné 10 disposé à l'intérieur d'un boîtier 20 et de deux couvercles 30.

L'élément bobiné 10 est constitué d'un empilement de feuilles enroulées ensemble en spire 101 de sorte à former une bobine cylindrique. Plus particulièrement, l'élément bobiné 10 comprend deux électrodes et un (ou plus d'un) séparateur pouvant chacun être composé d'une ou plusieurs feuilles.

Chaque électrode déborde à une extrémité respective de l'élément bobiné pour former une tranche collectrice de courant en forme de spirale 102, 103, à chaque extrémité de l'élément bobiné 10. Plus précisément, une feuille de chaque électrode, dite « feuille collectrice de courant », déborde à une extrémité respective de l'élément bobiné 10.

Ainsi, l'élément bobiné 10 comprend une tranche collectrice 102, 103 à chacune de ses extrémités opposées.

Le boîtier 20 est destiné à recevoir l'élément bobiné 10. Le boîtier est de forme cylindrique et ouvert à ses deux extrémités.

Les couvercles 30 sont destinés à fermer les deux extrémités du boîtier 20. Par ailleurs, chaque couvercle 30 est destiné à être connecté électriquement à l'extrémité d'une tranche collectrice 102, 103 respective de l'élément bobiné 10 :
- soit en soudant le couvercle 30 directement sur l'extrémité de la tranche collectrice 102, 103,
- soit reliant électriquement le couvercle 30 à une pièce intermédiaire soudée à l'extrémité de la tranche collectrice 102, 103.

Dans la suite de la description, on s'intéressera plus particulièrement au cas où l'extrémité de la tranche collectrice de courant 102, 103 est soudée directement au couvercle 30.

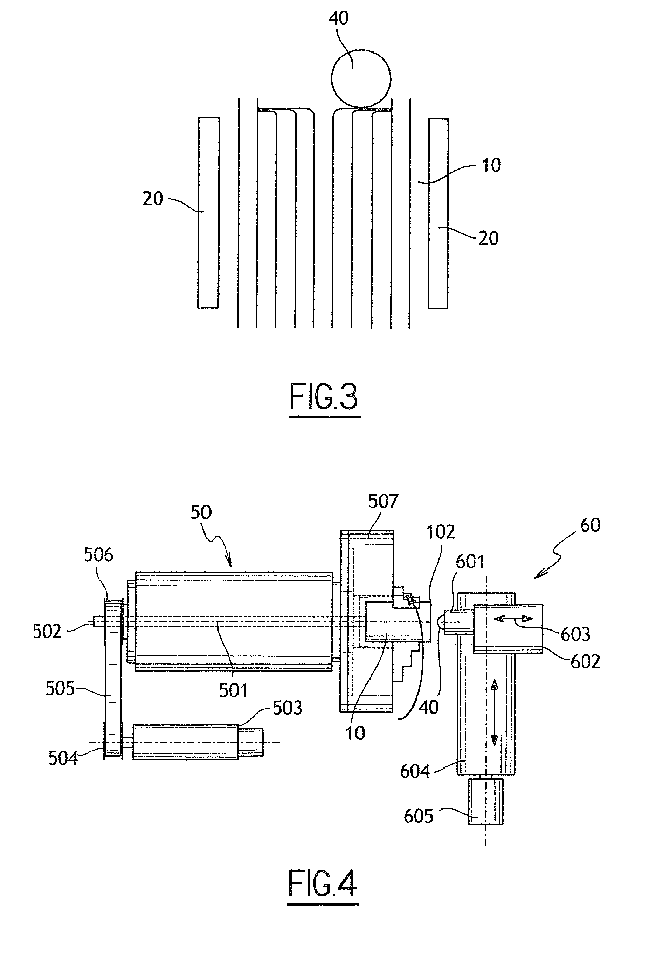

Préalablement au soudage laser de l'extrémité de la tranche collectrice 102, 103 sur le couvercle 30, avec ou sans pièce intermédiaire de connexion, l'invention propose la mise en oeuvre d'une étape de couchage radial de l'extrémité de la tranche collectrice de courant 102, 103 du centre de l'extrémité de la tranche collectrice à la périphérie de celle-ci. Cette étape est notamment illustrée à la figure 3.

Le couchage des spires 101 du centre vers la périphérie de l'extrémité de la tranche collectrice 102, 103 joue sur la difficulté des spires à s'étendre et donc à leur tendance à se coucher une fois un outil de couchage passé. A l'inverse, le couchage des spires 101 de la périphérie vers le centre de l'extrémité de la tranche va subir le fait que les spires 101 ont tendance à revenir dans leur position initiale une fois l'outil de couchage passé.

Les avantages du couchage radial des spires 101 du centre vers la périphérie de l'extrémité de la tranche collectrice 102, 103 sont nombreux. Notamment, un tel couchage permet obtenir un élément bobiné 10:
- dont la planéité des extrémités est améliorée,
- dont la quantité de matière des extrémités est sensiblement homogène,
- dont la surface de chaque extrémité présente peu de trous de matière.

Ceci permet de limiter les pertes d'étanchéité des ensembles de stockage 1 fabriqués et d'améliorer la qualité électrique et mécanique de la soudure du couvercle 30 sur l'extrémité de la tranche collectrice 102, 103.

Avantageusement, le couchage de l'extrémité de la tranche collectrice de courant 102, 103 peut être obtenu par écrasement. Le couchage par écrasement présente l'avantage d'améliorer la planéité de l'extrémité de la tranche collectrice 102, 103, notamment par rapport à un couchage des spires 101 par friction qui peut provoquer des détachements de matière induisant une augmentation de la rugosité.

La soudure du couvercle 30 sur l'extrémité de la tranche collectrice 102, 103 est généralement réalisée le long de rayons de l'extrémité de la tranche collectrice 102, 103. Pour faciliter l'automatisation du procédé de fabrication, l'étape de couchage peut réaliser sur toute la surface de l'extrémité de la tranche collectrice 102, 103. Ainsi, le contact entre le couvercle 30 et l'extrémité de la tranche collectrice de courant 102, 103 est optimale en tout point de la surface de l'extrémité de la tranche collectrice de courant 102, 103. De la sorte, la soudure présente la même qualité, quelque soit le rayon de l'extrémité de la tranche collectrice de courant 102, 103 sur laquelle cette soudure est réalisée.

L'étape de couchage peut être mise en oeuvre par un dispositif tel qu'illustré à la figure 4.

Le dispositif comprend un support d'élément bobiné 50, un galet 40, et un support de galet 60.

Le support d'élément bobiné 50 comprend un arbre 501 dont une extrémité 502 est connectée à des premiers moyens d'entraînement 503, pour la mise en rotation de l'arbre 501 autour de son axe longitudinal.

Les moyens d'entraînement 503 comprennent par exemple un moteur dont l'arbre de sortie comprend un pignon 504 menant relié par l'intermédiaire d'une courroie 505 à un pignon mené 506 disposé à l'extrémité 502 de l'arbre 501 du support d'élément bobiné 50. Bien entendu les moyens d'entraînement 503 peuvent être d'un autre type connu de l'homme du métier.

L'autre extrémité de l'arbre 501 est fixée à un mandrin 507 coaxial destiné à recevoir l'élément bobiné 10 de sorte que son axe de révolution soit coaxial à l'axe longitudinal de l'arbre 501.

Ainsi les moyens de support 50 de l'élément bobiné permettent la mise en rotation de l'élément bobiné 10 autour de son axe de révolution.

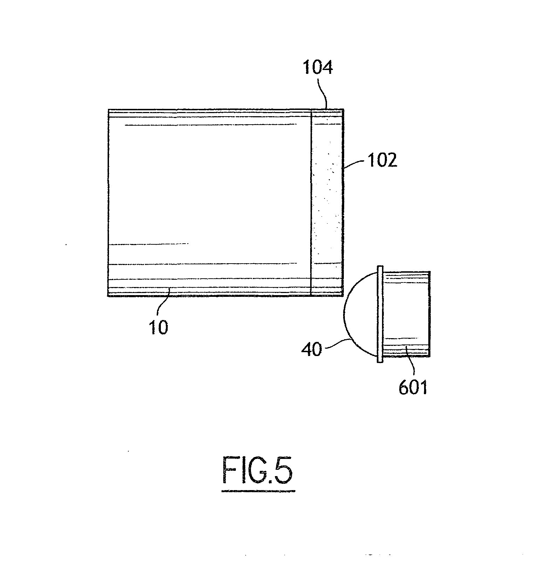

Le galet 40 présente préférentiellement une symétrie de révolution. Dans le mode de réalisation illustré à la figure 5, le galet 40 comprend une bille rotative par exemple métallique destinée à venir en contact avec l'extrémité de la tranche collectrice 102 pour coucher les spires 101 de l'extrémité de la tranche 102. La bille rotative présente l'avantage d'adapter sa vitesse à celle de l'élément bobiné 10 qui l'entraîne en rotation par frottement lorsque l'élément bobiné 10 et la bille rotative sont en contact. Un autre avantage de la bille rotative est que son usure est uniformément répartie sur sa surface, à l'inverse d'un galet fixe où l'usure est concentrée sur la surface de contact entre le galet et l'extrémité de la tranche collectrice.

Le support de galet 60 comprend une cupule 601 solidaire d'un chariot 602 destinée à maintenir le galet 40 tout en autorisant sa rotation autour de son centre de symétrie.

Le chariot 602 est apte à coulisser le long d'une première glissière 603 suivant un mouvement de translation dans une direction parallèle à l'axe de révolution de l'élément bobiné 10. Le chariot 602 est également apte à coulisser le long d'une deuxième glissière 604 suivant un mouvement de translation dans une direction perpendiculaire à l'axe de révolution de l'élément bobiné 10.

Le coulissement du chariot 602 le long des première et deuxième glissières 603, 604 est assuré par des deuxièmes moyens d'entraînement 605 de tout type connu par l'homme du métier tel qu'un moteur.

Le couchage de l'extrémité de la tranche collectrice de courant 102 est réalisé par application du galet 40 sur l'extrémité de la tranche collectrice de courant 102 depuis son centre jusqu'à sa périphérie. Le galet 40 est appliqué de sorte à comprimer les spires 101 au niveau de l'extrémité de la tranche collectrice de courant 102 afin de les coucher.

Pour cela, une fois l'élément bobiné 10 fixé dans le mandrin 507, celui-ci est mis en rotation autour de son axe de révolution.

La vitesse de rotation est de préférence supérieure à 400 tours par minute. En effet, plus la vitesse de rotation de l'élément bobiné 10 est importante, meilleure est la qualité du couchage des spires 101 de l'extrémité des tranches collectrice de courant 102. Toutefois, une vitesse trop importante peut provoquer un vieillissement prématuré du dispositif, et notamment du galet 40. C'est pourquoi la vitesse de rotation de l'élément bobiné 10 est préférentiellement comprise entre 400 et 1600 tours par minute, et encore plus préférentiellement comprise entre 800 et 1300 tours par minute.

Le chariot 602 est déplacé en translation le long de la deuxième glissière 604 par les deuxièmes moyens d'entraînement de sorte que le centre de symétrie du galet 40 coïncide avec l'axe de révolution de l'élément bobiné 10.

Le chariot 602 est ensuite déplacé en translation le long de la première glissière 603 par les deuxièmes moyens d'entraînement 605 de sorte que le galet 40 vienne en contact avec l'extrémité de la tranche collectrice de courant 102.

Les spires 101 de l'extrémité de la tranche collectrice 102 en contact avec le galet 40 se couchent.

Avantageusement, la surface de contact entre le galet 40 et l'extrémité de la tranche collectrice de courant 102 est inférieure au rayon de l'extrémité de la tranche collectrice de courant 102. Ceci permet d'augmenter l'efficacité du couchage à chaque passage du galet 40 sur l'extrémité de la tranche collectrice de courant 102.

Les deuxièmes moyens d'entraînement 605 déplacent le chariot 602 en translation le long du de la deuxième glissière 604 du centre vers la périphérie de l'extrémité de la tranche collectrice de courant. On couche ainsi l'extrémité de la tranche collectrice de courant 102 de façon à obtenir un recouvrement d'une spire 101 sur la spire 101 consécutive d'au moins 0,1 millimètre.

Une fois le passage du galet 40 sur toute la surface de l'extrémité de la tranche collectrice de courant 102 effectué, les deuxièmes moyens d'entraînement 605 déplacent le chariot 602 en translation le long de la première glissière 603 de sorte à écarter le galet 40 de l'extrémité de la tranche collectrice de courant 102.

L'étape de couchage peut être réalisée en un passage du galet 40 sur la surface de l'extrémité de la tranche collectrice de courant 102 ou en plusieurs passages. Un deuxième passage du galet 40 sur l'extrémité de la tranche collectrice de courant 102 rend la surface de l'extrémité de la tranche collectrice de courant 102 plus dense, ce qui améliore encore la qualité de la soudure réalisée ultérieurement entre le couvercle 30 et l'extrémité de la tranche collectrice. Alternativement, on peut réaliser plus de deux passages du galet 40 sur la surface de l'extrémité de la tranche collectrice de courant 102.

A chaque passage, l'extrémité de la tranche collectrice de courant 102 est préférentiellement couchée sur une hauteur comprise entre 0.5 millimètre et 3 millimètres par passage. En effet, un couchage de l'extrémité de la tranche 102 sur une hauteur inférieure à 0.5 millimètre par passage ne permet pas de coucher uniformément les spires pour l'une ou l'autre des raisons suivantes :
- d'une part les irrégularités du bobinage de l'élément bobiné peuvent être supérieures à la hauteur de couchage,
- d'autre part le couchage à une hauteur inférieure à 0.5 millimètre ne permet pas de dépasser la limite élastique des spires.

Par conséquent, un couchage sur une hauteur inférieure à 0.5 millimètre nécessite au moins un deuxième passage du galet sur l'extrémité de la tranche collectrice. Par ailleurs, un couchage sur une hauteur supérieure à 3 millimètre par passage peut entraîner des cassures des spires à l'extrémité de la tranche collectrice. C'est pourquoi préférentiellement, le couchage est réalisé sur une hauteur comprise entre 0.5 et 3 millimètres par passage du galet sur l'extrémité de la tranche collectrice. Plus préférentiellement encore, l'extrémité de tranche collectrice est couchée en deux passages, chaque passage couchant les spires sur une hauteur inférieure à 1.5 millimètres.

On a décrit en référence à la figure 5 un mode de réalisation du dispositif dans lequel d'une part l'élément bobiné cylindrique est animé d'un mouvement de rotation autour de son axe de révolution, et d'autre part le galet est animé d'un mouvement de translation perpendiculairement à l'axe de révolution de l'élément bobiné. Toutefois, d'autres variantes du dispositif dans lesquels l'élément bobiné est animé d'un mouvement relatif de rotation et de translation par rapport au galet peuvent être envisagées.

Par exemple, dans une variante non représentée du dispositif selon l'invention, le support de galet est fixe, et l'élément bobiné cylindrique est animé d'un mouvement de rotation autour de son axe de révolution et d'un mouvement de translation par rapport au galet. Dans une autre variante de réalisation du dispositif, l'élément bobiné est fixe, et d'autre part le galet est animé d'un mouvement de translation et d'un mouvement de rotation par rapport à l'élément bobiné.

Une fois l'extrémité de la tranche collectrice de courant 102 couchée, le dispositif peut être utilisé pour écraser la paroi latérale 104 de la tranche collectrice de courant 102 au niveau de son extrémité libre, afin de chanfreiner l'extérieur de la tranche collectrice de courant. Ceci permet d'éviter que les spires 101 extérieures couchées (i.e. les spires situées à la périphérie de l'extrémité de la tranche collectrice) ne dépassent de l'encombrement de l'élément bobiné 10. Par ailleurs, ce rabat vers l'intérieur des spires 101 périphériques facilite l'opération ultérieure de soudure en éloignant ces spires du bord du couvercle 30, zone souvent difficile à maîtriser en soudure.

On peut ensuite réaliser un couchage de l'extrémité de la tranche collectrice opposée selon le même procédé.

Le lecteur aura compris que de nombreuses modifications peuvent être apportées au procédé et au dispositif décrit précédemment sans sortir matériellement des nouveaux enseignements et des avantages décrits ici.

Par conséquent, toutes les modifications de ce type sont destinées à être incorporées à l'intérieur de la portée du module objet de l'invention telle que définie dans les revendications jointes.

Par exemple, d'autres modes de réalisation de l'élément bobiné peuvent être envisagés. Notamment, l'élément bobiné peut comprendre plus de deux électrodes.

Par ailleurs, les solutions décrites en référence à la soudure de l'extrémité de la tranche collectrice directement sur un couvercle peuvent s'appliquer de manière similaire à la soudure de l'extrémité de la tranche à une pièce intermédiaire reliée électriquement au couvercle.

Le galet peut comprendre une pluralité de billes rotatives espacées d'une distance d le long d'un rayon de l'extrémité de la tranche. Dans ce cas la pluralité de billes rotatives est déplacée simultanément du centre vers la périphérie de l'extrémité de la tranche collectrice sur la distance d, de sorte à coucher des zones différentes de l'extrémité de la tranche collectrice. Ceci permet de diminuer la durée de l'étape de couchage pour chaque extrémité.

En variante, le galet peut comprendre une pluralité de billes rotatives décalées angulairement les unes par rapport aux autres, chaque bille étant en contact avec toute la surface de l'extrémité de la tranche collectrice de courant, chaque rouleau successif augmentant la hauteur de couchage de l'extrémité de la tranche collectrice réalisée par le rouleau précédemment en contact avec l'extrémité de la tranche collectrice de courant.

Enfin, l'étape de couchage peut comprendre :
- une étape de préparation des bords des spires consistant à orienter vers l'extérieur le bord des spires de l'élément bobiné, et
- une étape consistant à écraser le bord des spires orientées de la base de l'élément bobiné.

Enfin, on comprendra aisément que l'invention peut être mise en oeuvre simultanément sur les deux faces opposées d'un même élément, en tenant par exemple l'élément dans un mors symétrique permettant le travail d'une mollette de couchage à chacune de ces extrémités

## Revendications

1. Procédé de fabrication d'un ensemble de stockage d'énergie électrique (1) comprenant un élément bobiné (10) cylindrique comportant au moins deux électrodes et au moins un séparateur enroulés ensemble en spires (101), chaque électrode débordant à une extrémité axiale respective de l'élément bobiné afin de former une tranche collectrice de courant (102, 103) sur laquelle au moins une pièce collectrice de courant reliée électriquement à un couvercle (30) est destinée à être soudée, ledit couvercle (30) venant fermer un boîtier (20) dans lequel est logé l'élément bobiné (10),
**caractérisé en ce que**
le procédé comprend une étape de couchage radial d'au moins une tranche collectrice de courant (102, 103) à son extrémité, du centre vers la périphérie de l'extrémité de la tranche collectrice (102, 103).

2. Procédé selon la revendication 1, **caractérisé en ce que** le couchage de l'extrémité de la tranche collectrice de courant (102, 103) est obtenu par écrasement.

3. Procédé selon l'une des revendications 1 à 2, **caractérisé en ce que** l'étape de couchage est réalisée sur toute la surface de l'extrémité de la tranche collectrice de courant (102, 103).

4. Procédé selon l'une des revendications 2 ou 3, **caractérisé en ce que** l'étape de couchage est réalisée par application d'au moins un galet (40) comprimant l'extrémité de la tranche collectrice de courant (102, 103) depuis le centre vers la périphérie de l'extrémité de la tranche collectrice de courant.

5. Procédé selon la revendication 4, **caractérisé en ce que** l'élément bobiné (10) est animé d'un mouvement relatif de translation et de rotation par rapport au galet (40).

6. Procédé selon l'une des revendications 4 ou 5, **caractérisé en ce que** la surface de contact entre le galet (40) et l'extrémité de la tranche collectrice de courant (102, 103) est inférieure au rayon de ladite extrémité.

7. Procédé selon l'une des revendications 4 à 6, **caractérisé en ce que** l'étape de couchage comprend au moins un passage du galet (40) sur toute la surface de l'extrémité de la tranche collectrice de courant (102, 103).

8. Procédé selon la revendication 7, **caractérisé en ce que** l'étape de couchage s'effectue en au moins deux passages du galet (40) sur l'extrémité de la tranche collectrice de courant (102, 103), chaque passage couchant les spires (101) sur une hauteur inférieure à 1,5 mm.

9. Procédé selon l'une des revendications 4 à 8, **caractérisé en ce que** la vitesse du mouvement de rotation est supérieure à 400 tours par minute, préférentiellement comprise entre 400 et 1600 tours par minute, et encore plus préférentiellement comprise entre 800 et 1300 tours par minute.

10. Procédé selon l'une des revendications 4 à 9, **caractérisé en ce que** le galet (40) couche l'extrémité de la tranche collectrice de courant sur une hauteur comprise entre 0.5 millimètre et 3 millimètres.

11. Procédé selon l'une des revendications 1 à 10, **caractérisé en ce que** l'on couche les tranches collectrices de courant (102, 103) de façon à
obtenir un recouvrement d'une spire sur la spire consécutive d'au moins 0,1 mm.

12. Procédé selon l'une des revendications 4 à 11, **caractérisé en ce que** d'une part l'élément bobiné (10) cylindrique est animé d'un mouvement de rotation autour de son axe de révolution, et d'autre part le galet (40) est animé d'un mouvement de translation perpendiculairement à l'axe de révolution de l'élément bobiné (10).

13. Procédé selon l'une des revendications 4 à 11, **caractérisé en ce que** d'une part le support du galet (40) est fixe, et d'autre part l'élément bobiné (10) cylindrique est animé d'un mouvement de rotation autour de son axe de révolution et d'un mouvement de translation par rapport au galet (40).

14. Procédé selon l'une des revendications 4 à 11, **caractérisé en ce que** d'une part l'élément bobiné (10) est fixe, et d'autre part le galet (40) est animé d'un mouvement de translation et d'un mouvement de rotation par rapport à l'élément bobiné (10).

15. Procédé selon l'une des revendications 1 à 14, **caractérisé en ce qu'**il comprend une étape consistant à écraser la paroi latérale (104) de la tranche collectrice de courant (102, 103) au niveau de son extrémité libre, pour chanfreiner l'extérieur de la tranche collectrice de courant une fois couchée.

16. Procédé selon l'une des revendications 1 à 15, **caractérisé en ce que** le galet (40) comprend au moins une bille rotative.

17. Procédé selon l'une des revendications 1 à 10, **caractérisé en ce que** le galet (40) comprend une pluralité de rouleaux espacés d'une distance d le long d'un rayon de l'extrémité de la tranche, la pluralité de rouleaux étant déplacée du centre vers la périphérie de l'extrémité de la tranche collectrice sur la distance d, de sorte à coucher des zones différentes de l'extrémité de la tranche collectrice.

18. Procédé selon l'une des revendications 1 à 10, **caractérisé en ce que** le galet (40) comprend une pluralité de rouleaux décalés angulairement les uns par rapport aux autres, chaque rouleau étant en contact avec toute la surface de l'extrémité de la tranche collectrice de courant, chaque rouleau successif augmentant la hauteur de couchage de l'extrémité de la tranche collectrice réalisée par le rouleau précédemment en contact avec l'extrémité de la tranche collectrice de courant.

19. Procédé selon l'une des revendications 1 à 3, **caractérisé en ce que** l'étape de couchage comprend :
- une étape de préparation des bords des spires consistant à orienter vers l'extérieur le bord des spires de l'élément bobiné, et
- une étape consistant à écraser le bord des spires orientées de la base de l'élément bobiné.

20. Dispositif de fabrication d'un ensemble de stockage d'énergie électrique comprenant un élément bobiné (10) cylindrique comportant au moins deux électrodes et au moins un séparateur enroulés ensemble en spires (101), chaque électrode débordant à une extrémité axiale respective de l'élément bobiné afin de former une tranche collectrice de courant (102, 103) sur laquelle au moins une pièce collectrice de courant reliée électriquement à un couvercle (30) est destinée à être soudée, ledit couvercle venant fermer un boîtier (20) dans lequel est logé l'élément bobiné (10),
**caractérisé en ce que**
le dispositif comprend des moyens de couchage radial d'au moins une tranche collectrice de courant (102, 103) à son extrémité, du centre vers la périphérie de l'extrémité de la tranche collectrice (102, 103).

21. Ensemble de stockage d'énergie électrique comprenant un élément bobiné (10) cylindrique comportant au moins deux électrodes et au moins un séparateur enroulés ensemble en spires (101), chaque électrode débordant à une extrémité axiale respective de l'élément bobiné afin de former une tranche collectrice de courant sur laquelle au moins une pièce collectrice de courant reliée électriquement à un couvercle est destinée à être soudée, ledit couvercle venant fermer un boîtier dans lequel est logé l'élément bobiné,
**caractérisé en ce que**
au moins une tranche collectrice de courant est couchée radialement à son extrémité, les spires étant couchées du centre vers la périphérie de l'extrémité de la tranche collectrice.

22. Ensemble de stockage d'énergie selon la revendication 21, **caractérisé en ce qu'**il est obtenu par le procédé selon l'une des revendications 1 à 19.

## Claims

1. A process for manufacturing an electric energy storage assembly (1) comprising a cylindrical coil element (10) comprising at least two electrodes and at least one separator wound together in turns (101), each electrode overlapping at a respective axial end of the coil element to form a current-collecting section (102, 103) on which at least one current-collecting piece connected electrically to a cover (30) is intended to be welded, said cover (30) closing off a casing (20) accommodating the coil element (10), **characterised in that** the process comprises a radial coating step of at least one current-collecting section (102, 103) at its end, from the centre to the periphery of the end of the collecting section (102, 103).

2. The process as claimed in Claim 1, **characterised in that** the coating of the end of the current-collecting section (102, 103) is obtained by crushing.

3. The process as claimed in any one of Claims 1 to 2, **characterised in that** the coating step is carried out over the entire surface of the end of the current-collecting section (102, 103).

4. The process as claimed in any one of Claims 2 or 3, **characterised in that** the coating step is carried out by application of at least one roller (40) compressing the end of the current-collecting section (102, 103) from the centre to the periphery of the end of the current-collecting section.

5. The process as claimed in Claim 4, **characterised in that** the coil element (10) is animated by relative translation and rotation movement relative to the roller (40).

6. The process as claimed in any one of Claims 4 or 5, **characterised in that** the contact surface between the roller (40) and the end of the current-collecting section (102, 103) is less than the radius of said end.

7. The process as claimed in any one of Claims 4 to 6, **characterised in that** the coating step comprises at least one pass of the roller (40) over the entire surface of the end of the current-collecting section (102, 103).

8. The process as claimed in Claim 7, **characterised in that** the coating step is completed in at least two passes of the roller (40) on the end of the current-collecting section (102, 103), each pass coating the turns (101) on a height less than 1.5 mm.

9. The process as claimed in any one of Claims 4 to 8, **characterised in that** the speed of the rotation movement is greater than 400 turns per minute, preferably between 400 and 1,600 turns per minute, and even more preferably between 800 and 1,300 turns per minute.

10. The process as claimed in any one of Claims 4 to 9, **characterised in that** the roller (40) coats the end of the current-collecting section at a height between 0.5 millimetre and 3 millimetres.

11. The process as claimed in any one of Claims 1 to 10, **characterised in that** the current-collecting sections (102, 103) are coated to produce covering of one turn on a consecutive turn of at least 0.1 mm.

12. The process as claimed in any one of Claims 4 to 11, **characterised in that** on the one hand the cylindrical coil element (10) is excited by rotation movement about its axis of revolution, and on the other hand the roller (40) is excited by translation movement perpendicularly to the axis of revolution of the coil element (10).

13. The process as claimed in any one of Claims 4 to 11, **characterised in that** on the one hand the support of the roller (40) is fixed, and on the other hand the cylindrical coil element (10) is excited by rotation movement about its axis of revolution and by translation movement relative to the roller (40).

14. The process as claimed in any one of Claims 4 to 11, **characterised in that** on the one hand the coil element (10) is fixed, and on the other hand the roller (40) is excited by translation movement and rotation movement relative to the coil element (10).

15. The process as claimed in any one of Claims 1 to 14, **characterised in that** it comprises a step consisting of crushing the side wall (104) of the current-collecting section (102, 103) at the level of its free end, to chamfer the exterior of the current-collecting section once it is coated.

16. The process as claimed in any one of Claims 1 to 15, **characterised in that** the roller (40) comprises at least one rotating ball.

17. The process as claimed in any one of Claims 1 to 10, **characterised in that** the roller (40) comprises a plurality of rollers spaced apart by a distance d along a radius of the end of the section, the plurality of rollers being moved from the centre to the periphery of the end of the collecting section over the distance d, so as to coat different zones of the end of the collecting section.

18. The process as claimed in any one of Claims 1 to 10, **characterised in that** the roller (40) comprises a plurality of rollers offset angularly relative to one another, each roller being in contact with the entire surface of the end of the current-collecting section, each successive roller increasing the coating height of the end of the collecting section made by the roller previously in contact with the end of the current-collecting section.

19. The process as claimed in any one of Claims 1 to 3, **characterised in that** the coating step comprises:
- a preparation step of the edges of the turns consisting of orienting to the exterior the edge of the turns of the coil element, and
- a step consisting of crushing the edge of the turns oriented from the base of the coil element.

20. A manufacturing device for an electric energy storage assembly comprising a cylindrical coil element (10) comprising at least two electrodes and at least one separator wound together in turns (101), each electrode overlapping at a respective axial end of the coil element to form a current-collecting section (102, 103) on which at least one current-collecting piece connected electrically to a cover (30) is intended to be welded, said cover closing off a casing (20) accommodating the coil element (10), **characterised in that** the device comprises radial coating means of at least one current-collecting section (102, 103) at its end, from the centre to the periphery of the end of the collecting section (102, 103).

21. An electric energy storage assembly comprising a cylindrical coil element (10) comprising at least two electrodes and at least one separator wound together in turns (101), each electrode overlapping at a respective axial end of the coil element to form a current-collecting section on which at least one current-collecting piece connected electrically to a cover is intended to be welded, said cover closing off a casing accommodating the coil element, **characterised in that** at least one current-collecting section is coated radially at its end, the turns being coated from the centre to the periphery of the end of the collecting section.

22. The electric energy storage assembly as claimed in Claim 21, **characterised in that** it is created by the process as claimed in any one of Claims 1 to 19.

## Patentansprüche

1. Verfahren zur Herstellung einer Einheit zur Speicherung elektrischer Energie (1), die ein zylindrisches gewickeltes Element (10) umfasst, das wenigstens zwei Elektroden und wenigstens ein Trennelement umfasst, die zusammen in Windungen (101) aufgewickelt sind, wobei jede Elektrode an einem zugehörigen axialen Ende des gewickelten Elements übersteht, um eine Stromsammelscheibe (102, 103) zu bilden, an der wenigstens ein elektrisch mit einem Deckel (30) verbundenes Stromsammelteil dafür vorgesehen ist, angeschweißt zu werden, wobei der Deckel (30) dafür vorgesehen ist, ein Gehäuse (20) zu verschließen, in dem das gewickelte Element (10) aufgenommen ist,
**dadurch gekennzeichnet, dass**
das Verfahren einen Schritt zum radialen Umlegen wenigstens einer Stromsammelscheibe (102, 103) an deren Ende umfasst, und dies vom Mittelpunkt in Richtung des Umfangrands des Endes der Sammelscheibe (102, 103).

2. Verfahren nach Anspruch 1, **dadurch gekennzeichnet, dass** das Umlegen des Endes der Stromsammelscheibe (102, 103) durch Quetschen erreicht wird.

3. Verfahren nach einem der Ansprüche 1 bis 2, **dadurch gekennzeichnet, dass** der Schritt zum Umlegen auf der gesamten Fläche des Endes der Stromsammelscheibe (102, 103) ausgeführt wird.

4. Verfahren nach einem der Ansprüche 2 oder 3, **dadurch gekennzeichnet, dass** der Schritt zum Umlegen durch das Anwenden wenigstens einer Walzvorrichtung (40) ausgeführt wird, die das Ende der Stromsammelscheibe (102, 103) ausgehend vom Mittelpunkt in Richtung des Umfangrands des Endes der Stromsammelscheibe zusammendrückt.

5. Verfahren nach Anspruch 4, **dadurch gekennzeichnet, dass** das gewickelte Element (10) in Bezug auf die Walzvorrichtung (40) mit einer Translations- und Drehbewegung angetrieben wird.

6. Verfahren nach einem der Ansprüche 4 oder 5, **dadurch gekennzeichnet, dass** die Kontaktfläche zwischen der Walzvorrichtung (40) und dem Ende der Stromsammelscheibe (102, 103) kleiner als der Radius des Endes ist.

7. Verfahren nach einem der Ansprüche 4 bis 6, **dadurch gekennzeichnet, dass** der Schritt zum Umlegen wenigstens einen Durchgang der Walzvorrichtung (40) auf der gesamten Fläche des Endes der Stromsammelscheibe (102, 103) umfasst.

8. Verfahren nach Anspruch 7, **dadurch gekennzeichnet, dass** der Schritt zum Umlegen in wenigstens zwei Durchgängen der Walzvorrichtung (40) auf dem Ende der Stromsammelscheibe (102, 103) ausgeführt wird, wobei jeder Durchgang die Windungen (101) auf einer Höhe von weniger als 1,5 mm umlegt.

9. Verfahren nach einem der Ansprüche 4 bis 8, **dadurch gekennzeichnet, dass** die Geschwindigkeit der Drehbewegung größer als 400 Umdrehungen pro Minute ist, vorzugsweise zwischen 400 und 1600 Umdrehungen pro Minute liegt und noch bevorzugter zwischen 800 und 1300 Umdrehungen pro Minute liegt.

10. Verfahren nach einem der Ansprüche 4 bis 9, **dadurch gekennzeichnet, dass** die Walzvorrichtung (40) das Ende der Stromsammelscheibe auf einer Höhe umlegt, die zwischen 0,5 Millimeter und 3 Millimeter liegt.

11. Verfahren nach einem der Ansprüche 1 bis 10, **dadurch gekennzeichnet, dass** die Stromsammelscheiben (102, 103) so umgelegt werden, dass eine Abdeckung von einer Windung auf die folgende Windung von wenigstens 0,1 mm erreicht wird.

12. Verfahren nach einem der Ansprüche 4 bis 11, **dadurch gekennzeichnet, dass** zum einen das zylindrische gewickelte Element (10) mit einer Drehbewegung um seine Drehachse angetrieben wird und zum anderen die Walzvorrichtung (40) mit einer Translationsbewegung senkrecht zur Drehachse des gewickelten Elements (10) angetrieben wird.

13. Verfahren nach einem der Ansprüche 4 bis 11, **dadurch gekennzeichnet, dass** zum einen der Träger der Walzvorrichtung (40) feststehend ist und zum anderen das zylindrische gewickelte Element (10) mit einer Drehbewegung um seine Drehachse und mit einer Translationsbewegung in Bezug auf die Walzvorrichtung (40) angetrieben wird.

14. Verfahren nach einem der Ansprüche 4 bis 11, **dadurch gekennzeichnet, dass** zum einen das gewickelte Element (10) feststehend ist und zum anderen die Walzvorrichtung (40) in Bezug auf das gewickelte Element (10) mit einer Translationsbewegung und mit einer Drehbewegung angetrieben wird.

15. Verfahren nach einem der Ansprüche 1 bis 14, **dadurch gekennzeichnet, dass** es einen Schritt umfasst, der darin besteht, die Seitenwand (104) der Stromsammelscheibe (102, 103) im Bereich ihres freien Endes zu quetschen, um das Äußere der Stromsammelscheibe abzufasen, nachdem diese umgelegt ist.

16. Verfahren nach einem der Ansprüche 1 bis 15, **dadurch gekennzeichnet, dass** die Walzvorrichtung (40) wenigstens eine drehbare Kugel umfasst.

17. Verfahren nach einem der Ansprüche 1 bis 10, **dadurch gekennzeichnet, dass** die Walzvorrichtung (40) mehrere Rollen umfasst, die mit einem Abstand d entlang eines Halbmessers des Endes der Scheibe beabstandet sind, wobei die mehreren Rollen vom Mittelpunkt in Richtung des Umfangrands des Endes der Sammelscheibe über die Strecke d verschoben werden, und dies derart, dass unterschiedliche Zonen des Endes der Sammelscheibe umgelegt werden.

18. Verfahren nach einem der Ansprüche 1 bis 10, **dadurch gekennzeichnet, dass** die Walzvorrichtung (40) außerdem mehrere Rollen umfasst, die gegeneinander in Bezug auf den Winkel verschoben sind, wobei jede Rolle mit der gesamten Fläche des Endes der Stromsammelscheibe in Kontakt ist und jede darauffolgende Rolle die Höhe des Umlegens des Endes der Sammelscheibe vergrößert, die von der vorausgehenden in Kontakt mit dem Ende der Stromsammelscheibe befindlichen Rolle realisiert wurde.

19. Verfahren nach einem der Ansprüche 1 bis 3, **dadurch gekennzeichnet, dass** der Schritt zum Umlegen Folgendes umfasst:
- einen Schritt zum Vorbereiten der Ränder der Windungen, der darin besteht, den Rand der Windungen des gewickelten Elements nach außen auszurichten, und
- einen Schritt, der darin besteht, den Rand der ausgerichteten Windungen der Basis des gewickelten Elements zu quetschen.

20. Vorrichtung zum Herstellen einer Einheit zum Speichern elektrischer Energie, die ein zylindrisches gewickeltes Element (10) umfasst, das wenigstens zwei Elektroden und wenigstens ein Trennelement umfasst, die zusammen in Windungen (101) aufgewickelt sind, wobei jede Elektrode an einem zugehörigen axialen Ende des gewickelten Elements übersteht, um eine Stromsammelscheibe (102, 103) zu bilden, an der wenigstens ein elektrisch mit einem Deckel (30) verbundenes Stromsammelteil dafür vorgesehen ist, angeschweißt zu werden, wobei der Deckel dafür vorgesehen ist, ein Gehäuse (20) zu verschließen, in dem das gewickelte Element (10) aufgenommen ist,
**dadurch gekennzeichnet, dass**
die Vorrichtung ein Mittel zum radialen Umlegen wenigstens einer Stromsammelscheibe (102, 103) an deren Ende umfasst, und dies vom Mittelpunkt in Richtung des Umfangrands des Endes der Sammelscheibe (102, 103).

21. Einheit zum Speichern elektrischer Energie, die ein zylindrisches gewickeltes Element (10) umfasst, das wenigstens zwei Elektroden und wenigstens ein Trennelement umfasst, die zusammen in Windungen (101) aufgewickelt sind, wobei jede Elektrode an einem zugehörigen axialen Ende des gewickelten Elements übersteht, um eine Stromsammelscheibe zu bilden, an der wenigstens ein elektrisch mit einem Deckel verbundenes Stromsammelteil dafür vorgesehen ist, angeschweißt zu werden, wobei der Deckel dafür vorgesehen ist, ein Gehäuse zu verschließen, in dem das gewickelte Element aufgenommen ist,
**dadurch gekennzeichnet, dass**
wenigstens eine Stromsammelscheibe an ihrem Ende radial umgelegt wird, wobei die Windungen vom Mittelpunkt in Richtung des Umfangrands des Endes der Sammelscheibe umgelegt werden.

22. Einheit zum Speichern von Energie nach Anspruch 21, **dadurch gekennzeichnet, dass** diese durch das Verfahren nach einem der Ansprüche 1 bis 19 erhalten wird.
